# EUROPÄISCHE PATENTSCHRIFT

(11) **EP 0 789 986 B1**
(45) Veröffentlichungstag und Bekanntmachung des Hinweises auf die Patenterteilung: **24.05.2000**
(21) Anmeldenummer: 97100751.3
(22) Anmeldetag: 18.01.1997
(51) Int. Cl.: A01B 59/00

(54) **Hubstange für die Dreipunktanbauvorrichtung eines Traktors**
Tractor hitch lift link
Bielle de relevage pour accouplement à trois points de tracteur

(30) Priorität: 15.02.1996 DE 19605560
(43) Veröffentlichungstag der Anmeldung: 20.08.1997
(73) Patentinhaber: GKN Walterscheid GmbH, 53797 Lohmar (DE)
(72) Erfinder: Müller, Norbert, 53809 Ruppichteroth (DE); Coenen, Herbert, Dipl.-Ing., 53639 Königswinter (DE); Vollmer, Jürgen, Dipl.-Ing., 53797 Lohmar (DE)
(74) Vertreter: Harwardt, Günther, Dipl.-Ing.

(56) Entgegenhaltungen:
- DE-A- 1 457 675
- DE-B- 1 109 933
- DE-B- 1 138 696
- DE-B- 1 238 706
- DE-C- 4 135 809
- FR-A- 1 202 370
- FR-A- 2 622 761
- US-A- 2 541 964
- US-A- 3 056 458
- US-A- 3 731 951

## Beschreibung

Die Erfindung betrifft eine Hubstange zur Verbindung des Unterlenkers einer Dreipunktanbauvorrichtung eines Traktors mit dem Hubarm des Traktors, mit ersten Anschlußmitteln zur Verbindung mit dem Hubarm des Traktors und zweiten Anschlußmitteln zur Verbindung mit dem Unterlenker des Traktors, mit einem Gehäuse und einem dazu in einer Bohrung entlang einer Längsachse verstellbar aufgenommenen Stangenelement, welche jeweils einem der Anschlußmittel zugeordnet sind, mit Mitteln zum Festsetzen des Stangenelementes zum Gehäuse auf eine fixe Länge, welche einen Steckbolzen und eine Steckbohrung im Gehäuse, die in der einen Richtung, sowie Anschläge am Gehäuse und am Stangenelement, die in der anderen Richtung wirksam sind, umfassen, und mit Mitteln zur Einstellung der fixen Hubstangenlänge,die eine Gewindeverbindung umfassen.

Eine solche Hubstange ist in der US 30 56 458 beschrieben. Das Gehäuse weist eine an seinem offenen Ende, aus dem das Stangenelement austritt, angebrachte Führungshülse auf, die zur Führung des Stangenelementes dient. An dem in das Gehäuse eintauchenden Ende des Stangenelementes ist eine weitere Führungshülse angebracht. Das Stangenelement ist mit einem Gewindeabschnitt in eine Gewindebohrung der Führungshülse eingeschraubt. Hierdurch ist die fixe Länge der Hubstange einstellbar, indem das Stangenelement zur Führungshülse verdreht wird. Die dem Stangenelement zugeordnete Führungshülse ist zwischen der dem Gehäuse zugeordneten Führungshülse und dem durch Bohrungen des Gehäuses hindurchsteckbaren Steckbolzen festlegbar. Um eine Schwimmstellung zu erreichen, ist der Steckbolzen aus dem Gehäuse herauszuziehen, so daß das Stangenelement mit seinem in dem Gehäuse eintauchenden Ende und diesem entlang der Längsachse verstellbar ist. Zur Einstellung der fixen Länge ist das dem Stangenelement zugeordnete Anschlußmittel in Form eines Gabelkopfes vom Unterlenker zu lösen. Danach kann das Stangenelement um die Längsachse gedreht werden. Voraussetzung dafür ist jedoch, daß die dem Stangenelement zugeordnete Führungshülse sich selbst nicht um die Längsachse dreht. Ferner besteht die Gefahr, daß im Betrieb beim Auftreten von Erschütterungen sich die Einstellung verändert, da die Führungshülse sich ungehindert auf dem Gewinde des Stangenelementes drehen kann.

Der Erfindung liegt die Aufgabe zugrunde, eine Hubstange zu schaffen, bei der die Einstellung der fixen Hubstangenlänge ermöglicht wird, ohne daß eines der Anschlußmittel vom Traktor bzw. vom Hubarm des Traktors oder vom Unterlenker desselben gelöst werden müßte. Darüber hinaus soll gewährleistet sein, daß die einmal eingestellte Länge sich während des Gebrauchs nicht ändern kann.

Diese Aufgabe wird erfindungsgemäß dadurch gelöst, daß das Stangenelement zumindest an seinem aus dem Gehäuse herausgeführten Ende einen Bohrungsabschnitt mit einem Gewinde aufweist, in dem eine Gewindestange mit ihrem Außengewinde verstellbar einsitzt, die mit einem der Anschlußmittel verbunden ist, und wobei der Bohrungsabschnitt und die Gewindestange die Mittel zur Einstellung der fixen Hubstangenlänge bilden, daß das Stangenelement an seinem in das Gehäuse eintauchenden Ende mit einer Ausnehmung oder Bohrung versehen ist, durch welche der in die Steckbohrung des Gehäuses eingesteckte Steckbolzen hindurchragt und damit das Stangenelement zum Gehäuse festsetzt, und daß das Stangenelement ferner an diesem Ende zur Ausnehmung bzw. Bohrung um die Längsachse versetzt einen sich entlang der Längsachse erstreckenden Schlitz aufweist, in den der Steckbolzen nach entsprechender Verdrehung des Stangenelementes zum Gehäuse einsteckbar ist.

Von Vorteil bei dieser Ausbildung ist, daß lediglich durch Entfernen des Steckbolzens es ermöglicht wird, das Stangenelement am vom Unterlenker gehaltenen Anschlußmittel, welches die Gewindestange aufweist, zu verdrehen, woraus eine Längenänderung resultiert. Wird der Steckbolzen eingesteckt, so ist die Länge für beide Positionen, in denen das Stangenelement gegenüber dem Gehäuse festgelegt werden kann, nicht mehr veränderbar. Das Stangenelement ist mittels des Steckbolzens sowohl in der Starrstellung als auch in der Schwimmstellung verdrehbar zum Gehäuse gehalten.

Darüber hinaus ist eine einfache Handhabung zur Umstellung von Schwimm- auf Starrstellung und umgekehrt möglich. Schließlich ergeben sich aufgrund der Anordnung kurze Baulängen. Die Länge des Schlitzes ist so bemessen, daß die gewünschte Axialverstellung von Stangenelement zum Gehäuse entlang der Längsachse erreicht wird. Vorzugsweise sind die Ausnehmungen und der Schlitz zu der in das Gehäuse eintauchenden Stirnfläche des Stangenelementes offen. Das Stangenelement kann aus einem Vollmaterial bestehen, das an dem Ende, in dem die Gewindstange einsitzt, hohlgebohrt ist oder, um eine möglichst leichte Ausführungsform zu erzielen, aus einem Rohr gestaltet sein.

Ferner ist zur Bewegungsbegrenzung in Auszugsrichtung des Stangenelementes aus dem Gehäuse dem Stangenelement mindestens ein Führungsring zugeordnet. Dieser ist unmittelbar zur Abstützung an einem weiteren dem Gehäuse zugeordneten Anschlag vorgesehen. Es ist jedoch auch möglich, zur Abstandsüberbrückung die Abstützung des dem Stangenelement zugeordneten Führungsringes an einer Buchse vorzunehmen, die dem Anschlag des Gehäuses vorgeschaltet ist. Vorzugsweise sind dem Stangenelement zwei Führungsringe zugeordnet, die auf diesem zueinander beabstandet angebracht sind. Hierbei können die Führungsringe jeweils in einer Richtung verschiebbar auf dem Stangenelement angebracht sein und in der anderen Richtung durch Sicherungsringe festgelegt werden. Die Anordnung ist vorzugsweise so getroffen, daß die Führungsringe jeweils durch einen Sicherungsring am Gehäuse bzw. am Stangenelement in entgegengesetzten Richtungen wirkend festgelegt sind. Zwischen den beiden Führungsringen ist eine Druckfeder abgestützt. Diese dient dazu, die Führungsringe bei Starr- und Schwimmstellung in Anlage zu den Sicherungsringen zu halten.

Alternativ ist es möglich, die Führungsringe fest mit dem Stangenelement zu verbinden.

Eine besonders günstige Gestaltung ergibt sich, wenn das Stangenelement als Rohr ausgebildet ist.

Um das Verdrehen des Stangenelementes zur Einstellung der fixen Hubstangenlänge zu erleichtern, ist an dessen Außenseite eine Lasche angebracht. Diese steht, bezogen auf die Längsachse, radial ab. Üblicherweise ist eines der Anschlußmittel als Kugelgelenk und das andere als Anschlußgabel ausgebildet.

Die erfindungsgemäße Hubstange und deren Anwendung bei einer Dreipunktanbauvorrichtung eines Traktors.

Es zeigt
- Figur 1: einen Traktor mit einer Dreipunktanbauvorrichtung, die die erfindungsgemäße Hubstange aufweist,
- Figur 2: eine Seitenansicht der Hubstange,
- Figur 3: die Seitenansicht gemäß Figur 2, teilweise im Längsschnitt, wobei sich die Hubstange in der Starrstellung befindet, das heißt mit fix eingestellter Hubstangenlänge und
- Figur 4: eine Seitenansicht der Hubstange gemäß Figur 3, jedoch in der Schwimmstellung.

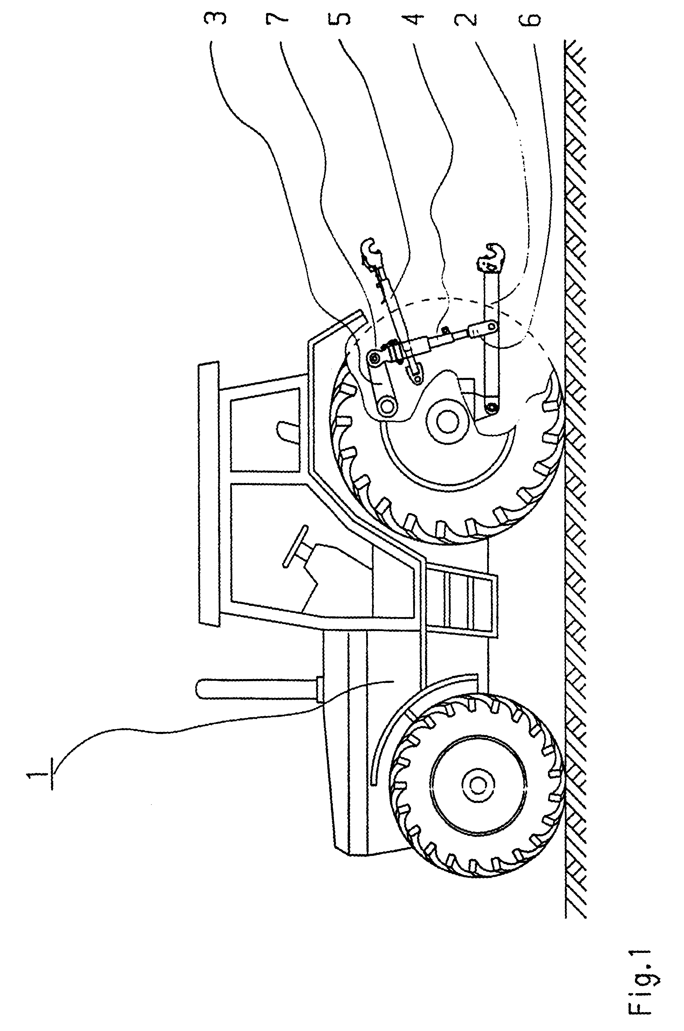

Aus Figur 1 ist der Traktor 1 mit einem an seinem Heck mit einem Ende schwenkbar angebrachten Unterlenker 2 ersichtlich. Parallel zu dem sichtbaren Unterlenker 2 ist ein weiterer Unterlenker angebracht. Oberhalb und zwischen diesen beiden ist der Oberlenker 5 mit einem Ende am Traktorheck schwenkbar angelenkt. Unterlenker 2 und Oberlenker 5 dienen zur Anbringung eines Gerätes an den Traktor 1. Zur Bewegung des anzuhängenden Gerätes ist der Unterlenker 2 mittels der Hubstange 4 an den Hubarm 3 angelenkt. Der Hubarm 3 ist mit einem Kraftantrieb verbunden, über den er heb- und senkbar ist. Über die Hubstange 4 wird damit auch der Unterlenker 2 gehoben oder gesenkt. Zur Verbindung der Hubstange 4 mit dem Unterlenker 2 dient eine Anschlußgabel 6. Ferner ist die Hubstange 4 an den Hubarm 3 mittels eines Kugelgelenkes 7 angeschlossen.

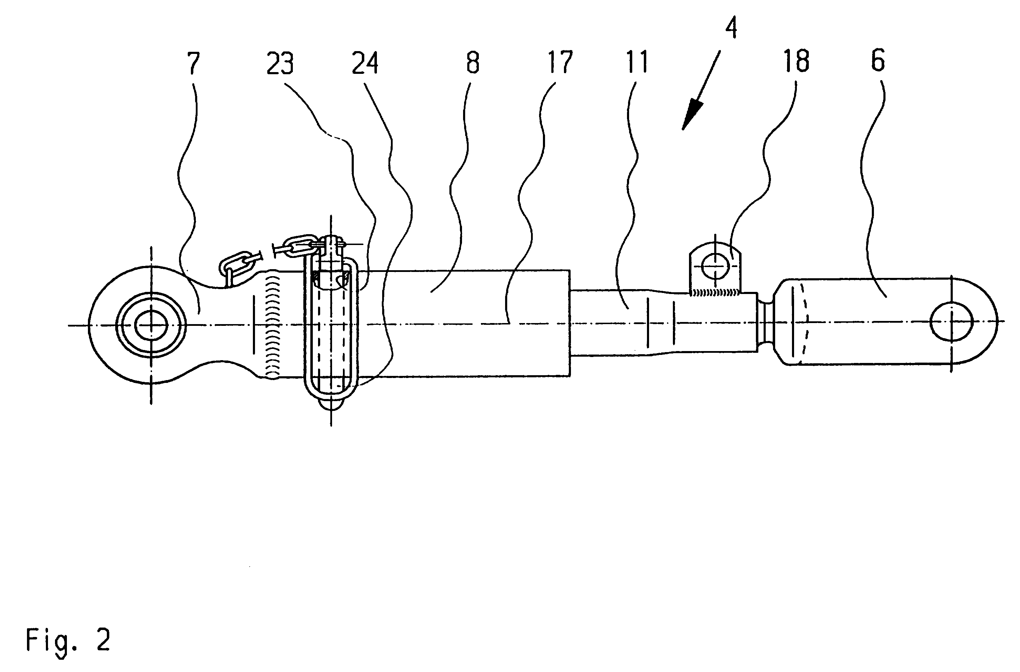

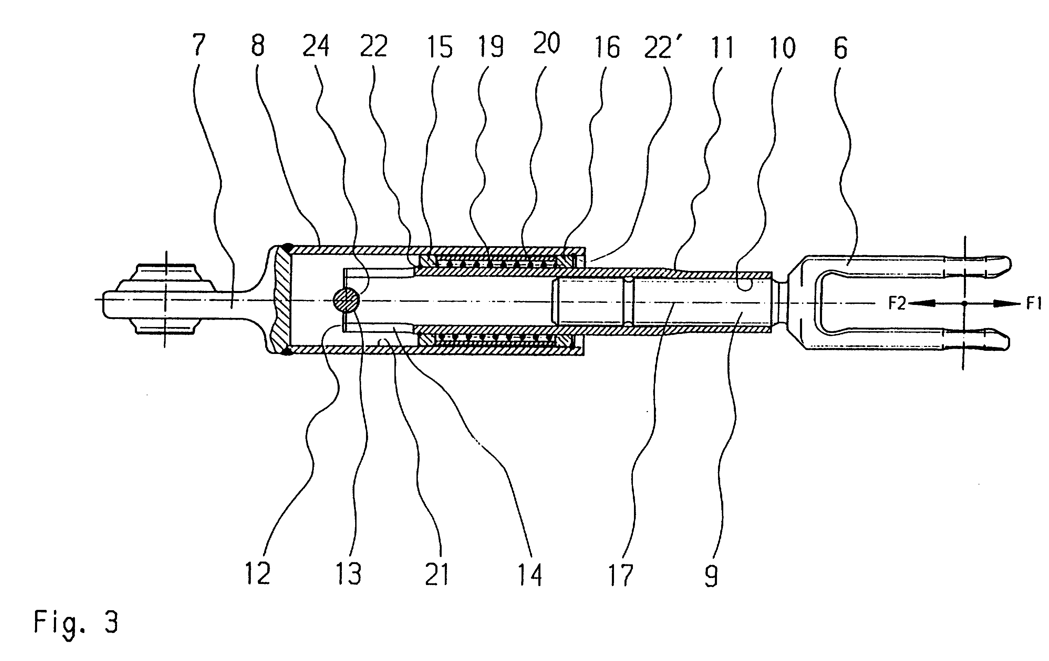

Die Hubstange 4 ist in Figur 2 in vergrößertem Maßstab im Verhältnis zur Figur 1 in der Seitenansicht dargestellt. Die Hubstange 4 umfaßt ein Stangenelement 11, das die Anschlußgabel 6 trägt, und das Gehäuse 8, an dem das Kugelgelenk 7 befestigt ist. Das Stangenelement 11 ist in dem Gehäuse 8 entlang der Längsachse 17 verstellbar. Es kann jedoch auch über einen Steckbolzen 24, der in eine Bohrung 23 des Gehäuses 8 eingesteckt ist und mit einem Ende aus diesem herausragt, auf eine fixe Länge blockiert werden. Die fixe Länge der Hubstange kann darüber hinaus mittels des Stangenelementes 11, das mit der Anschlußgabel 6 über eine Gewindeverbindung verbunden ist, durch Verdrehen des Stangenelementes 11 durch Angriff an die Lasche 18 eingestellt werden. Dies ist im Zusammenhang mit Figur 3 noch näher beschrieben.

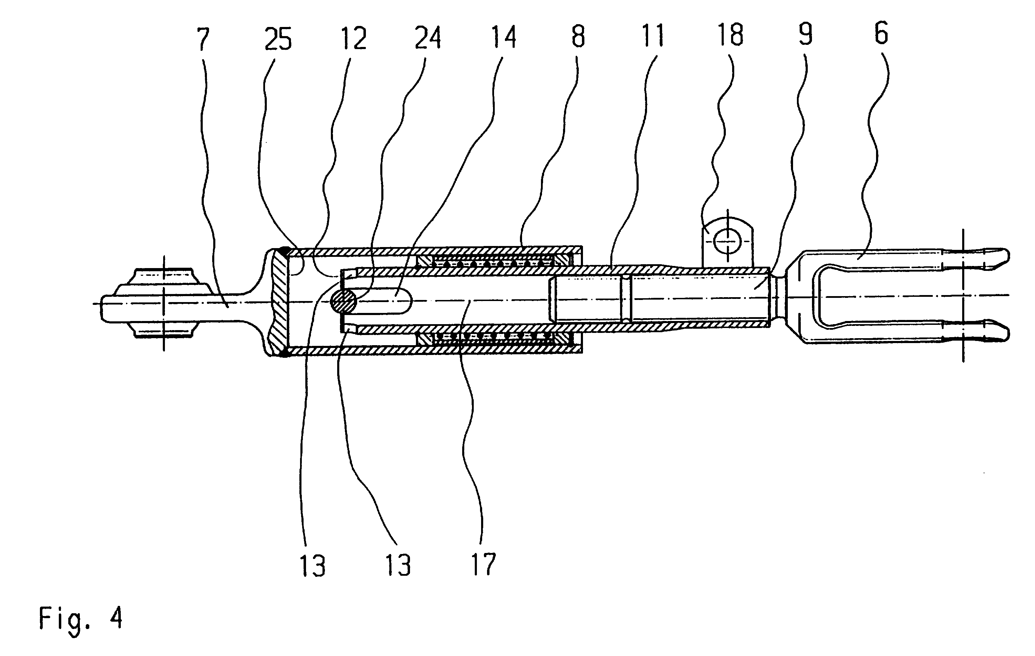

Aus Figur 3 ist ersichtlich, daß die Anschlußgabel 6 eine Gewindestange 9 trägt, die mit einem Gewinde in eine Gewindebohrung 10 des rohrförmig gestalteten Stangenelementes 11 eingeschraubt ist. Das Stangenelement 11 ragt in die Bohrung 21 des Gehäuses 8 axial hinein. Ausgehend von der Stirnfläche 12 des Stangenelementes 11, die in die Bohrung 21 des Gehäuses 8 eintaucht, ist eine zur Stirnfläche 12 hin offene Ausnehmung 13 angebracht, die dem Querschnitt des Steckbolzens 24 angepaßt ist und quer zur Längsachse 17 verläuft. Dem Stangenelement 11 sind zwei Führungsringe 15, 16 zugeordnet. Diese sind im Abstand zueinander angeordnet. Der Führungsring 15 sitzt auf der Außenfläche des Stangenelementes 11 auf und stützt sich in Richtung auf das Kugelgelenk 7 zu gegen einen Sicherungsring 22 ab. Der zweite Führungsring 16 ist zum offenen Ende des Gehäuses 8 hin auf der Außenfläche des Stangenelementes 11 angeordnet und stützt sich in Richtung zur Anschlußgabel 6 hin gegen den Sicherungsring 22', der in eine Nut in der Gehäusebohrung 21 eingreift, ab. Zwischen beiden ist eine Druckfeder 19 abgestützt. Diese ist koaxial um das Stangenelement 11 herum angeordnet. Zwischen den beiden Führungsringen 15, 16 ist eine Buchse 20 angeordnet. Bei Einleitung einer Kraft in Richtung F1 auf die Anschlußgabel 6 wird diese über die Gewindestange 9 auf das Stangenelement 11 und von dem Sicherungsring 22 auf den Führungsring 15 und von diesem über die Buchse 20 und den Führungsring 16 auf den Sicherungsring 22' und von diesem in das Gehäuse 8 und das Kugelgelenk 7 übertragen, so daß eine Verlängerung der Hubstange nicht möglich ist. Bei Aufbringung einer Kraft F2 in der dazu entgegengesetzten Richtung wird diese über die Anschlußgabel 6 auf die Gewindestange 9, das Stangenelement 11 und von diesen über den Steckbolzen 24 auf das Gehäuse 8 und das Kugelgelenk 7 übertragen, so daß auch eine Verkürzung der Hubstangenlänge nicht möglich ist. Darüber hinaus ist auch eine Betätigung des Stangenelementes 11 im Sinne einer Verdrehung um die Längsachse 17 nicht möglich, da bei eingebauter Hubstange entsprechend Figur 1 die Anschlußgabel 6 und das Gehäuse 8 nur im Rahmen der Bewegungsmöglichkeit des Kugelgelenkes 7 zueinander verdrehbar sind. Das Stangenelement 11 wird durch den Steckbolzen 24, der in die Ausnehmung 13 eingreift, unverdrehbar zum Gehäuse 8 gehalten. Somit ist auch keine Verstellung auf der Gewindestange 9 möglich. Das rohrförmige Stangenelement 11 ist ausgehend von der Stirnfläche 12 mit einem Schlitz 14 versehen, der 90° zur Ausnehmung 13 um die Längsachse 17 versetzt angebracht ist. Zur Bewegung von Stangenelement 11 und Gehäuse 8 in eine Stellung, in der die Starrstellung, wie sie aus Figur 3 ersichtlich ist, aufgegeben ist und eine axiale Verstellung von Stangenelement 11 und Gehäuse 8 zueinander entlang der Längsachse möglich ist, ist zunächst der Steckbolzen 24 aus der Ausnehmung 13 und der Steckbohrung 23 des Gehäuses 8 herauszuziehen. Anschließend erfolgt eine Verdrehung des Stangenelementes 11 durch Angriff an die Lasche 18 um 90° in die aus Figur 4 ersichtliche Position. Danach kann der Steckbolzen 24 in die Bohrung 23 des Gehäuses 8 wieder eingesteckt werden und den Schlitz 14 passieren, um auf der anderen Seite aus der Bohrung 23 des Gehäuses 8 auszutreten. Bei dieser Position ist bei Einleitung einer Kraft in Richtung F2 gemäß Figur 3 auf die Anschlußgabel 6 eine Verkürzung der Hubstangenlänge insofern möglich, als das Stangenelement 11 weiter in das Gehäuse 8 hinein bewegt werden kann, bis je nach Bemessung dessen Stirnfläche 12 entweder zur Anlage am Boden 25 kommt oder das Ende des Schlitzes 14 zur Anlage an den Steckbolzen 24 gelangt. In einer der Richtung F1 entsprechenden Kraftaufbringung auf die Anschlußgabel 6 ergeben sich dieselben Verhältnisse, wie im Zusammenhang mit Figur 3 beschrieben.

### Bezugszeichenliste

- 1: Traktor
- 2: Unterlenker
- 3: Hubarm
- 4: Hubstange
- 5: Oberlenker
- 6: Anschlußgabel
- 7: Kugelgelenk
- 8: Gehäuse
- 9: Gewindestange
- 10: Gewindebohrung
- 11: Stangenelement
- 12: Stirnfläche
- 13: Ausnehmung
- 14: Schlitz
- 15, 16: Führungsring
- 17: Längsachse
- 18: Lasche
- 19: Druckfeder
- 20: Buchse
- 21: Bohrung
- 22, 22': Sicherungsring
- 23: Steckbohrung
- 24: Steckbolzen
- 25: Boden
- F1, F2: Kraftrichtung

## Patentansprüche

1. Hubstange (4) zur Verbindung des Unterlenkers (2) einer Dreipunktanbauvorrichtung eines Traktors (1) mit dem Hubarm (3) des Traktors (1), mit ersten Anschlußmitteln (7) zur Verbindung mit dem Hubarm (3) des Traktors (1) und zweiten Anschlußmitteln (6) zur Verbindung mit dem Unterlenker (2) des Traktors (1), mit einem Gehäuse (8) und einem darin in einer Bohrung (21) entlang einer Längsachse (17) verstellbar aufgenommenen Stangenelement (11), welche jeweils einem der Anschlußmittel (6, 7) zugeordnet sind, mit Mitteln zum Festsetzen des Stangenelementes (11) zum Gehäuse (8) auf eine fixe Länge, welche einen Steckbolzen (24) und eine Steckbohrung (23) im Gehäuse (8), die in der einen Richtung, sowie Anschläge am Gehäuse (8) und am Stangenelement (11), die in der anderen Richtung wirksam sind, umfassen, und mit Mitteln zur Einstellung der fixen Hubstangenlänge, die eine Gewindeverbindung umfassen,
dadurch gekennzeichnet,
daß das Stangenelement (11) zumindest an seinem aus dem Gehäuse (8) herausgeführten Ende einen Bohrungsabschnitt (10) mit einem Gewinde aufweist, in dem eine Gewindestange (9) mit ihrem Außengewinde verstellbar einsitzt, die mit einem (6) der Anschlußmittel (6, 7) verbunden ist, wobei der Bohrungsabschnitt (10) und die Gewindestange (9) die Mittel zur Einstellung der fixen Hubstangenlänge bilden, daß das Stangenelement (11) an seinem in das Gehäuse (8) eintauchenden Ende mit einer Ausnehmung (13) oder Bohrung versehen ist, durch welche der in die Steckbohrung (23) des Gehäuses (8) eingesteckte Steckbolzen (24) hindurchragt und damit das Stangenelement (11) zum Gehäuse (8) festsetzt, und daß das Stangenelement (11) ferner an diesem Ende zur Ausnehmung (13) bzw. Bohrung um die Längsachse (17) versetzt einen sich entlang der Längsachse (17) erstreckenden Schlitz (14) aufweist, in den der Steckbolzen (24) nach entsprechender Verdrehung des Stangenelementes (11) zum Gehäuse (8) einsteckbar ist.

2. Hubstange nach Anspruch 1,
dadurch gekennzeichnet,
daß die Ausnehmung (13) und der Schlitz (14) zu der in das Gehäuse (8) eintauchenden Stirnfläche (12) des Stangenelementes (11) offen sind.

3. Hubstange nach Anspruch 1,
dadurch gekennzeichnet,
daß zur Bewegungsbegrenzung in Auszugsrichtung dem Stangenelement (11) mindestens ein Führungsring (15, 16) zugeordnet ist, welcher entweder zur unmittelbaren Abstützung an einem dem Gehäuse (8) zugeordneten Anschlag (22') oder zur Abstützung an diesem unter Zwischenschaltung einer Buchse (20) bestimmt ist.

4. Hubstange nach Anspruch 3,
dadurch gekennzeichnet,
daß dem Stangenelement (11) zwei Führungsringe (15, 16) zueinander beabstandet zugeordnet sind.

5. Hubstange nach Anspruch 3,
dadurch gekennzeichnet,
daß die Führungsringe (15, 16) jeweils durch einen Sicherungsring (22, 22') am Gehäuse (8) bzw. am Stangenelement (11) in entgegengesetzten Richtungen festgelegt sind.

6. Hubstange nach Anspruch 3,
dadurch gekennzeichnet,
daß zwischen den beiden Führungsringen (15, 16) eine Druckfeder (19) abgestützt ist.

7. Hubstange nach Anspruch 4,
dadurch gekennzeichnet,
daß die Führungsringe (15, 16) fest mit dem Stangenelement (11) verbunden sind.

8. Hubstange nach einem der Ansprüche 1 bis 7,
dadurch gekennzeichnet,
daß das Stangenelement (11) als Rohr ausgebildet ist.

9. Hubstange nach einem der Ansprüche 1 bis 8,
dadurch gekennzeichnet,
daß von der Außenseite des Stangenelementes (11) eine Lasche (18) radial, bezogen auf die Längsachse (17), absteht.

10. Hubstange nach Anspruch 1,
dadurch gekennzeichnet,
daß eines der Anschlußmittel als Kugelgelenk (7) und das andere als Anschlußgabel (6) ausgebildet ist.

## Claims

1. A lifting rod (4) for connecting the lower steering arm (2) of a three-point attaching device of a tractor (1) to the lifting arm (3) of the tractor (1), having a first attaching element (7) to be connected to the lifting arm (3) of the tractor (1), and a second attaching element (6) to be connected to the lower steering arm (2) of the tractor (1), having a housing (8) and a rod element (11) received in the housing (8) in a bore (21) so as to be adjustable in the bore (21) along a longitudinal axis (17), which housing (8) and rod element (11) are associated with one of the attaching elements (6, 7), having means for fixing the rod element (11) relative to the housing (8) at a fixed length, which means comprise a plug-in pin (24) and a plug-in bore (23) in the housing (8) which are effective in the one direction, as well as stops at the housing (8) and at the rod element (11), which are effective in the other direction, and having means for setting the fixed lifting rod length, which means comprise a threaded connection,
characterised in
that the rod element (11), at least at its end projecting from the housing (8), comprises a bore portion (10) with a thread which adjustably holds a threaded rod (9) on its outer thread, which threaded rod (9) is connected to one (6) of the attaching elements (6, 7), with the bore portion (10) and the threaded rod (9) forming the means for setting the fixed lifting rod length, that the rod element (11), at its end entering the housing (8), is provided with a recess (13) or a bore through which there extends the plug-in pin (24) inserted into the plug-in bore (23) of the housing (8), thus fixing the rod element (11) relative to the housing (8), and that, furthermore, the rod element (11), at that end, comprises a slot (14) which is offset around the longitudinal axis (17) relative to the recess (13) or the bore, which extends along the longitudinal axis (17) and into which the plug-in pin (24) can be inserted after the rod element (11) has been rotated accordingly relative to the housing (8).

2. A lifting rod according to claim 1,
characterised in
that the recess (13) and the slot (14) are open towards the end face (12) of the rod element (11), which end face (12) enters the housing (8).

3. A lifting rod according to claim 1,
characterised in
that for limiting the movement in the extracting direction, the rod element (11) is associated with at least one guiding ring (15, 16) which is provided either for being supported directly on a stop (22') associated with the housing (8) or for being supported on said stop (22'), with a bush (20) being inserted therebetween.

4. A lifting rod according go claim 3,
characterised in
that the rod element (11) is associated with two spaced guiding rings (15, 16).

5. A lifting rod according to claim 3,
characterised in
that the guiding rings (15, 16) are each held by a securing ring (22, 22') at the housing (8) and at the rod element (11) respectively in opposite directions.

6. A lifting rod according to claim 3,
characterised in
that a pressure spring (19) is supported between the two guiding rings (15, 16).

7. A lifting rod according to claim 4,
characterised in
that the guiding rings (15, 16) are firmly connected to the rod element (11).

8. A lifting rod according to any one of claims 1 to 7,
characterised in
that the rod element (11) is provided in the form of a tube.

9. A lifting rod according to any one of claims 1 to 8,
characterised in
that, with reference to the longitudinal axis (17), a tab (18) radially projects from the outer face of the rod element (11).

10. A lifting rod according to claim 1,
characterised in
that one of the attaching elements is provided in the form of a ball joint (7) and the other one in the form of an attaching yoke (6).

## Revendications

1. Barre de levage (4) pour la liaison du bras directeur inférieur (2) d'un dispositif d'attelage à trois points dans un tracteur (1) avec le bras de levage (3) du tracteur (1), comprenant un premier moyen de raccordement (7) pour la liaison avec le bras de levage (3) du tracteur (1) et un deuxième moyen de raccordement (6) pour la liaison avec le bras directeur inférieur (2) du tracteur (1), comprenant un boîtier (8) et un élément de barre (11) reçu dans ce dernier dans un perçage (21), avec faculté de déplacement le long d'un axe longitudinal (17), l'un des moyens de raccordement (6, 7) respectif étant associé audit élément de barre (11), comprenant des moyens pour fixer l'élément de barre (11) vis-à-vis du boîtier (8) à une longueur fixe, lesdits moyens comprenant un goujon enfichable (24) et un perçage d'enfichage (23) dans le boîtier (8), lesquels agissent dans une direction, ainsi que des butées sur le boîtier (8) et sur l'élément de barre (11), lesquelles agissent dans l'autre direction, et comprenant des moyens pour établir la longueur fixe de la barre de levage, lesdits moyens comprenant une liaison à pas de vis,
caractérisée en ce que
l'élément de barre (11) présente, au moins sur son extrémité sortant hors du boîtier (8), un tronçon de perçage (10) avec un taraudage, dans lequel est engagée une tige filetée (9) avec faculté de réglage au moyen de son filetage extérieur, ladite tige filetée étant reliée à l'un (6) des moyens de raccordement (6, 7), ledit tronçon de perçage (10) et ladite tige filetée (9) formant lesdits moyens pour établir la longueur fixe de la barre de levage, en ce que l'élément de barre (11) est pourvu à son extrémité qui plonge dans le boîtier (8) d'un évidement (13) ou d'un perçage que traverse le goujon enfichable (24) enfiché dans le perçage d'enfichage (23) du boîtier (8), et fixe ainsi l'élément de barre (11) vis-à-vis du boîtier (8), et en ce que l'élément de barre (11) présente en outre à cette extrémité une fente (14), s'étendant le long de l'axe longitudinal (17) avec décalage vis-à-vis de l'évidement (13) ou du perçage autour de l'axe longitudinal (17), dans laquelle il est possible d'enficher le goujon enfichable (24) après rotation correspondante de l'élément de barre (11) par rapport au boîtier (8).

2. Barre de levage selon la revendication 1, caractérisée en ce que l'évidement (13) et la fente (14) sont ouverts en direction de la surface frontale (12), plongeant dans le boîtier (8), de l'élément de barre (11).

3. Barre de levage selon la revendication 1, caractérisée en ce que, pour la limitation du déplacement dans la direction de sortie, il est associé à l'élément de barre (11) au moins une bague de guidage (15, 16) laquelle est destinée soit au soutien immédiat contre une butée (22') associée au boîtier (8), soit au soutien contre celle-ci avec interposition d'une douille (20).

4. Barre de levage selon la revendication 3, caractérisée en ce que deux bagues de guidage (15, 16) écartées l'une de l'autre sont associées à l'élément de barre (11).

5. Barre de levage selon la revendication 3, caractérisée en ce que les bagues de guidage (15, 16) sont respectivement fixées par une bague de blocage (22, 22') sur le boîtier (8), ou respectivement sur l'élément de barre (11) dans des directions opposées.

6. Barre de levage selon la revendication 3, caractérisée en ce qu'un ressort de compression (19) est soutenu entre les deux bagues de guidage (15, 16).

7. Barre de levage selon la revendication 4, caractérisée en ce que les bagues de guidage (15, 16) sont fermement reliées à l'élément de barre (11).

8. Barre de levage selon l'une des revendications 1 à 7, caractérisée en ce que l'élément de barre (11) est réalisé sous forme de tube.

9. Barre de levage selon l'une des revendications 1 à 8, caractérisé en ce qu'une patte (18) dépasse radialement de la face extérieure de l'élément de barre (11), en se rapportant à l'axe longitudinal (17).

10. Barre de levage selon la revendication 1, caractérisée en ce que l'un des moyens de raccordement est réalisé sous forme d'articulation à bille (7), et l'autre moyen de raccordement est réalisé sous forme de fourchette de raccordement (6).
